# EUROPEAN PATENT APPLICATION

(11) **EP 3 812 188 A1**
(43) Date of publication of application: **28.04.2021**
(21) Application number: 20168167.3
(22) Date of filing: 06.04.2020
(51) Int. Cl.: B60K 1/00, F16H 3/54, F16H 3/78, F16H 61/04

(54) **ELECTRIC VEHICLE DRIVING APPARATUS**

(30) Priority: 22.10.2019 KR 20190131676
(71) Applicant: LG Electronics Inc., 07336 SEOUL (KR)
(72) Inventor: KIM, Yoonuk, 06772 Seoul (KR); AHN, Youngchan, 06772 Seoul (KR); SUNG, Changwoo, 06772 Seoul (KR); LEE, Junggu, 06772 Seoul (KR)
(74) Representative: Vossius & Partner Patentanwälte Rechtsanwälte mbB

(57) **Abstract**

According to various embodiments, an electric vehicle driving apparatus may include a driving motor, a plurality of shafts, a plurality of gears including a planetary gear set, a synchronizer, and a clutch. The electric vehicle driving apparatus may have a coaxial structure in which an input shaft connected to the driving motor is disposed coaxially with an output shaft connected to a wheel, and may continuously transmit power through a power bypass path when changing a speed. The electric vehicle driving apparatus may improve a spatial usability and improve shifting feeling by minimizing shift shock.

## Description

### CROSS-REFERENCE TO RELATED APPLICATION

This application claims the benefit of Korean Patent Application No. 10-2019-0131676, filed on October 22, 2019, in the Korean Intellectual Property Office, the disclosure of which is incorporated herein in its entirety by reference.

### BACKGROUND

### 1. Field

The present disclosure relates to an electric vehicle driving apparatus.

### 2. Description of the Related Art

There are increasing demands for electric vehicles running on electricity to replace vehicles running on petroleum (or a combination of electricity and petroleum) that causes pollution.

Since an electric vehicle drives wheels using electric power charged in a battery provided in the electric vehicle, various developments have been carried out to maximize a driving distance by minimizing the weight and volume of the electric vehicle.

For existing electric vehicles, a method for driving a wheel by decelerating power of a driving motor by a simple decelerator has been applied. Yet, with increasing demands for electric vehicles capable of driving at high speed with high performance, it is required for the electric vehicles to provide a shift function with two or more shift speeds.

Regarding a transmission of an electric vehicle, a related art has been published.
1. Korean Patent Publication No. 10-2013-0013283 (Publication Date: February 6, 2013)
2. Title: TWO-SPEED TRANSMISSION FOR ELECTRIC VEHICLE

In the related art, there is disclosed a two-speed transmission for an electric vehicle to implement two-speed transmission by combining one friction clutch with two one-way clutches or by combining one friction clutch with one bidirectional clutch.

### SUMMARY

An existing two-speed transmission for an electric vehicle including the related document is designed in a manner in which three shafts including an input shaft, a power transmission shaft, and an output shaft are disposed on different axes in an offset-wise manner. In this case, an area from a motor connected to the input shaft all the way to the output shaft is occupied by the transmission. As a result, it may be difficult to utilize a space of the electric vehicle.

Further, the existing two-speed transmission for the electric vehicle, including the related document, implements the two-speed transmission by combining two or more friction clutches, by combining one friction clutch and two one-way clutches, or by combining one friction clutch and one bidirectional clutch. As a result, there may be problems due to increased volume of the transmission and the weight of the electric vehicle, thereby reducing power efficiency and increasing a manufacturing cost.

Further, the existing two-speed transmission for the electric vehicle including the related document has a problem of failing to consider a shifting impact that is delivered to a user since power to be transmitted to a wheel in a shifting procedure is blocked. If additional design is devised in consideration of the aforementioned problem, the transmission may increase in volume, weight, and manufacturing cost and may become more complex in configuration.

According to example embodiments of the present disclosure, there are provided an electric vehicle driving apparatus capable of improving spatial usability of an inner configuration of an electric vehicle, providing a multi-speed shift function using a minimum number of components, and minimizing a transmission impact.

According to an aspect, there is provided an electric vehicle driving apparatus including a driving motor, a plurality of shafts, a plurality of gears including a planetary gear set, a synchronizer, and a clutch. In the electric vehicle driving apparatus, an input shaft connected to the driving motor is disposed coaxially with an output shaft connected to a wheel. Also, based on controls of the synchronizer and the clutch, the electric vehicle driving apparatus may continuously transmit power through a power bypass path when changing a speed.

According to another aspect, there is also provided an electric vehicle driving an input shaft connected to a driving motor and an output shaft disposed coaxially with the input shaft, a bypass gear disposed at an outer side of a bypass shaft to be externally engaged with a motor gear disposed at an outer side of the input shaft, a planetary gear set disposed at the outer side of the bypass shaft, a first output gear and a second output gear arranged at an outer side of an shift shaft disposed coaxially with the bypass shaft, a synchronizer selectively coupled to the bypass shaft or a carrier of the planetary gear set and selectively transmit power from either the bypass shaft or the carrier to the first output gear, and a clutch configured to selectively transmit the power from the bypass shaft to the second output gear.

The input shaft and the shift shaft may be formed as hollow shafts, and the output shaft and the bypass shaft may be formed as solid shafts.

When the synchronizer couples either the carrier or the bypass shaft with the shift shaft, the clutch may be configured to restrict power transmission between the bypass shaft and the second output gear. When the synchronizer releases the coupling between the shift shaft and the carrier or the bypass shaft, the clutch may be configured to allow the power transmission between the bypass shaft and the second output gear.

The synchronizer may include a sleeve configured to relatively move in an axial direction of the bypass shaft. In response to the sleeve being coupled with either the carrier or the bypass shaft, the synchronizer may be configured to couple the shift shaft with the carrier or the bypass shaft, either coupled with the sleeve.

The planetary gear set may include a sun gear, a ring gear disposed to enclose the sun gear, and pinion gears, each disposed to be externally engaged with an outer circumferential surface of the sun gear and an inner circumferential surface of the ring gear. The ring gear may be fixed to a housing of the electric vehicle driving apparatus so as to be driven with restrictions.

A third gear ratio of the power transmitted through the bypass shaft and the second output gear may be a ratio ranging between a first gear ratio of power transmitted through the carrier and the first output gear and a second gear ratio of power transmitted through the bypass shaft and the first output gear.

The clutch may include a frictional clutch.

The electric vehicle driving apparatus may further include a differential gear disposed at the outer side of the output shaft to receive power from the first output gear or the second output gear.

The electric vehicle driving apparatus may further include a processor electrically connected to the synchronizer and the clutch. The processor may be configured to control operations of the synchronizer and the clutch based on an electrical signal.

The processor may be configured to, based on a first signal, control the synchronizer to decouples the shift shaft from either the carrier or the bypass shaft and engage the clutch to allow power transmission between the bypass shaft and the second output gear. The processor may be configured to, based on a second signal, disengage the clutch to restrict the power transmission between the bypass shaft and the second output gear and control the synchronizer to couple the shift shaft to either the carrier or the bypass shaft.

When the synchronizer and the clutch are controlled based on the first signal, the differential gear may be configured to receive power of the driving motor through the first output gear. When the synchronizer and the clutch are controlled based on the second signal, the differential gear may be configured to receive the power of the driving motor through the second output gear.

The clutch may be disposed at an end portion of the bypass shaft.

The input shaft may be connected to the driving motor to rotate based on power generated in the driving motor.

When the synchronizer couples the carrier with the shift shaft, the output shaft may be configured to integrally rotate with the carrier based on the carrier rotating about the bypass shaft.

The differential gear may be disposed to be externally engaged with the first output gear and the second output gear.

According to another aspect, there is also provided an electric vehicle driving apparatus including a driving motor, a plurality of shafts including an input shaft, an output shaft disposed coaxially with the input shaft, a bypass shaft spaced apart from the input shaft, and a shift shaft coaxially with the bypass shaft, a motor gear coupled to an outer circumferential surface of the input shaft, a bypass gear coupled to an outer circumferential surface of the bypass shaft and externally engaged with the motor gear, a planetary gear set including a sun gear coupled to the outer circumferential surface of the bypass shaft, a ring gear fixedly disposed to enclose the sun gear, pinion gears, each disposed to be externally engaged with an outer circumferential surface of the sun gear and an inner circumferential surface of the ring gear, and a carrier coupled to a rotary shaft of each of the pinion gears, a plurality of output gears including a first output gear and a second output gear and coupled to an outer circumferential surface of the shift shaft, the second output gear being spaced apart from the first output gear, a synchronizer configured to selectively couple either the carrier or the bypass shaft to the shift shaft, and a clutch configured to selectively control power transmission between the bypass shaft and the second output gear.

### BRIEF DESCRIPTION OF THE DRAWINGS

The above and other aspects, features, and advantages of certain embodiments will be more apparent from the following detailed description taken in conjunction with the accompanying drawings, in which:
FIG. 1 is a diagram illustrating an electric vehicle driving apparatus according to various embodiments of the present disclosure;
FIGS. 2A and 2B are diagrams illustrating an operational state of an electric vehicle driving apparatus according to an example embodiment of the present disclosure;
FIGS. 3A and 3B are diagrams illustrating an operational state of an electric vehicle driving apparatus according to an example embodiment of the present disclosure; and
FIGS. 4A and 4B are diagrams illustrating an operational state of an electric vehicle driving apparatus according to an example embodiment of the present disclosure.

### DETAILED DESCRIPTION

Hereinafter, preferred embodiments of the present disclosure will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. In describing the present disclosure, moreover, the detailed description will be omitted when a specific description for publicly known technologies to which the present disclosure pertains is judged to obscure the gist of the present disclosure. Also, it should be noted that the accompanying drawings are merely illustrated to easily explain the concept of the present disclosure, and therefore, they should not be construed to limit the technological concept disclosed herein by the accompanying drawings.

The terms 'first', 'second', etc. may be used to describe various components, but the components are not limited by such terms. The terms are used only for the purpose of distinguishing one component from other components.

When an arbitrary component is described as "being connected to" or "being linked to" another component, this should be understood to mean that still another component(s) may exist between them, although the arbitrary component may be directly connected to, or linked to, the corresponding other component. In contrast, when an arbitrary component is described as "being directly connected to" or "being directly linked to" another component, this should be understood to mean that no component exists between them.

A singular expression can include a plural expression as long as it does not have an apparently different meaning in context.

In the present application, the terms "include" and "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

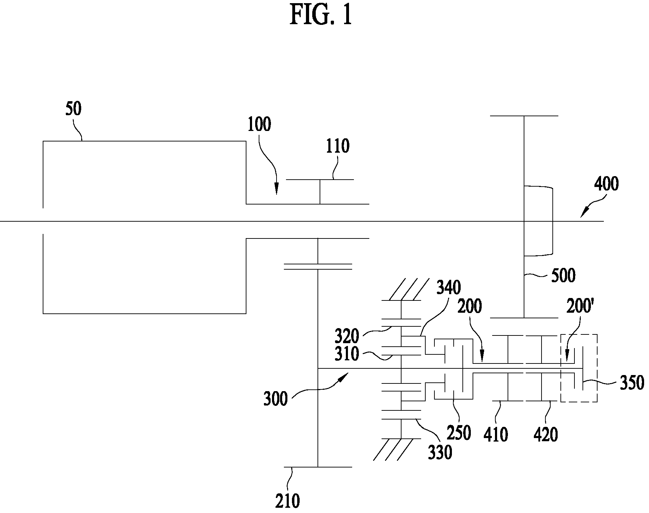

FIG. 1 is a diagram illustrating an electric vehicle driving apparatus according to various embodiments of the present disclosure.

Referring to FIG. 1, an electric vehicle driving apparatus may include a driving motor 50 and a transmission (or a gearbox) that receives power from the driving motor 50 and providing the power to a wheel.

For example, the driving motor 50 may include a device for generating power (e.g., torque) using a battery included in an electric vehicle.

The battery may be a component provided to supply power to the electric vehicle, and may include a repetitively chargeable and dischargeable secondary cell or fuel cell. The driving motor 50 may provide power by converting electrical energy received from the battery into kinetic energy.

The power generated by the driving motor 50 may be decelerated or shifted in the transmission and provided to the wheel.

The transmission may include a plurality of shafts, a plurality of gears, a synchronizer 250 that selectively connects to at least one of these components (e.g., the plurality of shafts or the plurality of gears), and a clutch 350.

For example, the plurality of shafts may include an input shaft 100 directly connected to the driving motor 50, a bypass shaft 300 indirectly connected to the driving motor 50 through a gear, a shift shaft 200, 200', and an output shaft 400.

The input shaft 100 may be directly connected to the driving motor 50 to be integrally driven with the driving motor 50.

The bypass shaft 300 may be spaced apart from the input shaft 100 to extend in an axial direction.

The shift shaft 200, 200' may be disposed coaxially with the bypass shaft 300. For example, the shift shaft 200, 200' may be configured as a hollow shaft and the bypass shaft 300 may be configured as a solid shaft. In this example, the shift shaft 200, 200' and the bypass shaft 300 may be arranged on one axis.

The output shaft 400 may be disposed coaxially with the input shaft 100. The output shaft 400 may be connected to a wheel (e.g., a front wheel and/or a rear wheel) of the electric vehicle. The output shaft 400 may receive power from the shift shaft 200, 200' or the bypass shaft 300 and provide the power to the wheel. The input shaft 100 and the output shaft 400 may be arranged coaxially with the driving motor 50 and a wheel (not shown). For example, the input shaft 100 may be configured as a hollow shaft and the output shaft 400 may be configured as a solid shaft. In this example, the input shaft 100 and the output shaft 400 may be arranged on one axis.

In the electric vehicle driving apparatus of the present disclosure, the input shaft 100 and the output shaft 400 may be arranged on a same axis, which may ensure an easier design implementation in terms of dispositional relationship with other components in the electric vehicle.

As a comparison example, when the input shaft 100 and the output shaft 400 are arranged on different axes in the electric vehicle driving apparatus as an offset-wise manner, a relatively large volume may be occupied in a radial direction of the input shaft 100 in comparison to the electric vehicle driving apparatus of the aforementioned coaxial manner, so that a location in which other components are to be arranged may be relatively restricted. According to example embodiments of the present disclosure, the electric vehicle driving apparatus may maximize a spatial usability of the electric vehicle.

Furthermore, in the electric vehicle driving apparatus of the present disclosure, shafts may be arranged in two axes, for example, an axis of the input shaft 100 and the output shaft 400 and an axis of the shift shaft 200, 200' and the bypass shaft 300. Through this, the electric vehicle driving apparatus may provide a shift function as a compact-sized transmission.

In one example embodiment, the input shaft 100 and the bypass shaft 300 may be spaced apart from each other in parallel. However, embodiments are not limited to such arrangement, and various modifications are applicable based on positions of other components of the electric vehicle. For example, the input shaft 100 and the bypass shaft 300 may be arranged to have a predetermined space therebetween but not to be parallel.

The plurality of gears may include a motor gear 110, a bypass gear 210, a planetary gear set, a plurality of output gears, and a differential gear 500.

The motor gear 110 may be integrally coupled with the input shaft 100 at an outer circumferential surface of the input shaft 100 and rotate about a rotation axis of the input shaft 100 in accordance with the driving of the driving motor 50.

The bypass gear 210 may be externally engaged with the motor gear 110. For example, the bypass gear 210 may be coupled to an outer circumferential surface of the bypass shaft 300 and integrally driven with the bypass shaft 300. The bypass gear 210 may rotate about a rotation axis of the bypass shaft 300 in accordance with driving of the motor gear 110.

The planetary gear set may include a sun gear 310, a plurality of pinion gears 320, a ring gear 330, and a carrier 340.

The sun gear 310 may be coupled to the outer circumferential surface of the bypass shaft 300. When the bypass shaft 300 integrally rotates in accordance with driving of the bypass gear 210, the sun gear 310 may also rotate about the rotation axis of the bypass shaft 300.

The ring gear 330 may be spaced apart from the outer circumferential surface of the sun gear 310 and disposed to enclose the sun gear 310. The plurality of pinion gears 320 may be located in the space between the ring gear 330 and the outer circumferential surface of the sun gear 310. The ring gear 330 may be integrally fixed to a housing of the transmission and thus, driven with restrictions.

Each of the pinion gears 320 may be externally engaged with the outer circumferential surface of the sun gear 310 and an inner circumferential surface of the ring gear 330. The pinion gears 320 may be provided in plural and spaced apart from one another at preset intervals. In accordance to driving of the sun gear 310, the pinion gears 320 may revolve around the rotation axis of the bypass shaft 300 and simultaneously, rotate about a rotary shaft of each of the pinion gears 320. The rotary shaft of each of the pinion gears 320 may be connected to the carrier 340.

The carrier 340 may rotate about the rotation axis of the bypass shaft 300 based on a revolving motion of the pinion gears 320.

The carrier 340 may be selectively coupled to a first shift shaft, for example, the shift shaft 200 based on an operation of the synchronizer 250.

The synchronizer 250 may include a sleeve that relatively moves in an axial direction of the first shift shaft 200. Based on the relative movement, the sleeve may be coupled (or bonded) with the carrier 340 or coupled (or bonded) with the bypass shaft 300. The synchronizer 250 may selectively couple the carrier 340 or the bypass shaft 300 to the first shift shaft 200 using the sleeve.

For example, when the synchronizer 250 couples the carrier 340 to the first shift shaft 200, the first shift shaft 200 may be integrally driven with the carrier 340 and transmit power from the carrier 340 to a first output gear 410.

Also, when the synchronizer 250 couples the bypass shaft 300 to the first shift shaft 200, the first shift shaft 200 may be integrally driven with the bypass shaft 300 and transmit power from the bypass shaft 300 to the first output gear 410.

The clutch 350 may be disposed at an end portion of the bypass shaft 300.

The electric vehicle driving apparatus may selectively restrict power transmission between the bypass gear 210 and a second output gear 420 based on an operation of the clutch 350, for example, based on an engagement or a disengagement of the clutch 350.

For example, in response to the engagement of the clutch 350, the power of the bypass gear 210 may be transmitted to the second output gear 420 through the bypass shaft 300. Also, in response to the disengagement of the clutch 350, the power transmission between the bypass shaft 300 and the second output gear 420 may be restricted to prevent the power of the bypass gear 210 from being transmitted to the second output gear 420 through the bypass shaft 300.

The clutch 350 may be any one of various types of frictional clutches, and may be operable through any one of a mechanical, hydraulic, and electronic methods, for example.

The plurality of output gears may include the first output gear 410 and the second output gear 420. For example, the first output gear 410 may be coupled to an outer circumferential surface of the first shift shaft 200 to rotate along with the first shift shaft 200. Also, the second output gear 420 may be coupled to an outer circumferential surface of a second shift shaft, for example, the shift shaft 200' to rotate along with the shift shaft 200'.

For example, based on an operation of the synchronizer 250, the first output gear 410 may receive the power selectively from the carrier 340 or the bypass shaft 300, either coupled with the first shift shaft 200. Also, the second output gear 420 may receive the power from the bypass shaft 300 based on an operation of the carrier 340.

The plurality of output gears may be spaced apart from one another. Each of the plurality of output gears may be disposed to be externally engaged with the differential gear 500.

The differential gear 500 may be disposed to be rotatable about the rotation axis of the output shaft 400 connected to the wheel.

The differential gear 500 may receive the power through the first output gear 410 or the second output gear 420 and drive the wheel connected to the output shaft 400 using the received power.

The differential gear 500 may consecutively receive the power of the driving motor 50 from the first output gear 410 or the second output gear 420. For example, the differential gear 500 may be engaged with at least one of the first output gear 410 or the second output gear 420 to be driven in response to the first output gear 410 or the second output gear 420 rotating.

In the electric vehicle driving apparatus of the present disclosure, while the driving motor 50 provides the power, the first output gear 410 or the second output gear 420 may be selectively driven based on the operations of the synchronizer 250 and the clutch 350.

For example, the second output gear 420 may not be driven while the first output gear 410 is driven, and the first output gear 410 may not be driven while the second output gear 420 is driven.

In the electric vehicle driving apparatus, to change a gear ratio from a first gear ratio to a second gear ratio or from the second gear ratio to the first gear ratio, the power transmission between the first shift shaft 200 and the bypass shaft 300 may be temporarily blocked. In this case, the electric vehicle driving apparatus may continuously transmit the power to the differential gear 500 through the second shift shaft 200' and the second output gear 420.

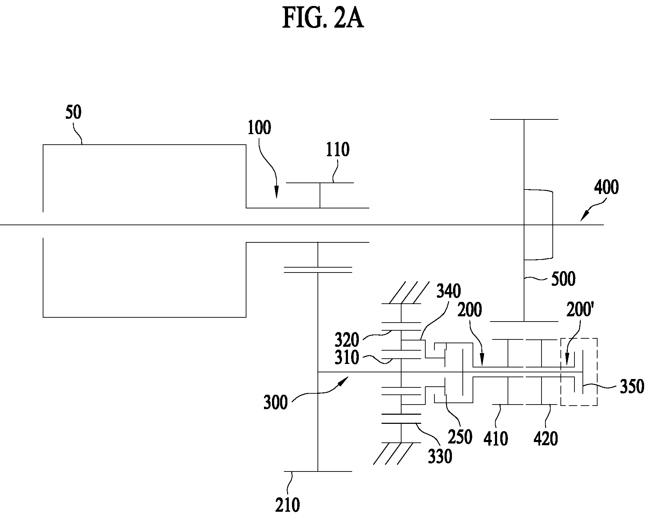

Hereinafter, an operation of the electric vehicle driving apparatus will be described with reference to FIGS. 2A through 4B.

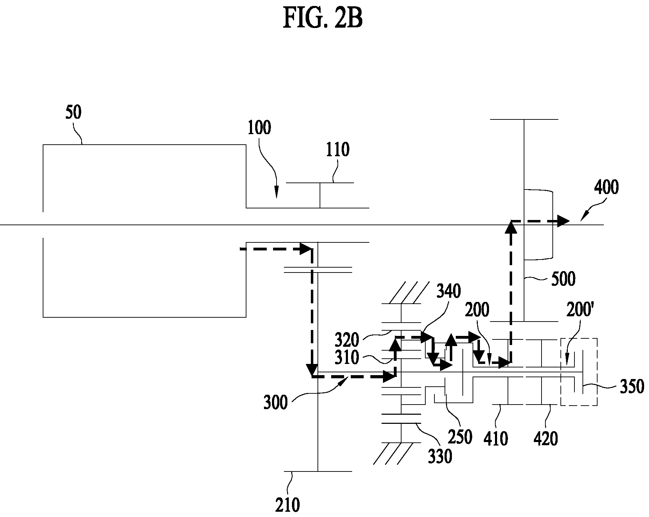

FIGS. 2A and 2B are diagrams illustrating a power transmission flow of an electric vehicle driving apparatus according to an example embodiment of the present disclosure. FIGS. 2A and 2B illustrate a power transmission flow of the electric vehicle driving apparatus driven at a first gear ratio, for example.

Referring to FIGS. 2A and 2B, based on operations of the synchronizer 250 and the clutch 350, the electric vehicle driving apparatus may provide power of the driving motor 50 to a wheel through the differential gear 500 by transmitting the power in a sequence of the input shaft 100, the motor gear 110, the bypass gear 210, the bypass shaft 300, the sun gear 310, the pinion gears 320, the carrier 340, the first shift shaft 200, and the first output gear 410.

The wheel may be driven at the first gear ratio. The electric vehicle driving apparatus may be in a structure in which a deceleration is performed at least three times to drive the wheel at the first gear ratio and thus, may secure a sufficient deceleration ratio.

As illustrated in FIGS. 2A and 2B, to drive the wheel at the first gear ratio, the synchronizer 250 may couple the carrier 340 and the first shift shaft 200.

For example, in response to a sleeve included in the synchronizer 250 being coupled with the carrier 340, the synchronizer 250 may couple the carrier 340 and the first shift shaft 200, so that the first shift shaft 200 is driven together when the carrier 340 is driven.

In this case, the clutch 350 may be in a disengaged state such that the power transmission between the bypass shaft 300 and the second shift shaft 200' (or the second output gear 420) is blocked. For example, in response to the disengagement of the clutch 350, the power transmission between the bypass shaft 300 coupled with the bypass gear 210 and the second shift shaft 200' coupled with the second output gear 420 may be blocked, so that the bypass shaft 300 and the second output gear 420 may operate independently of each other.

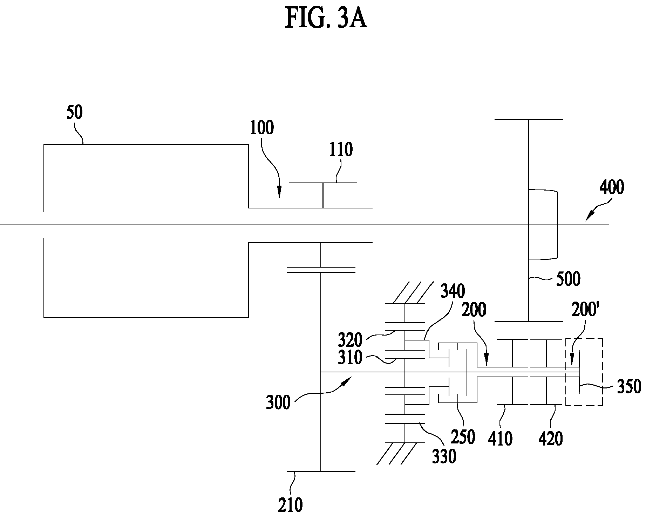

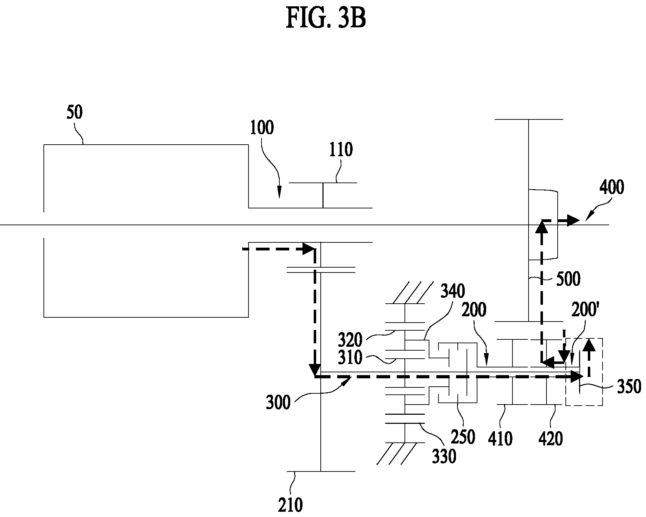

FIGS. 3A and 3B are diagrams illustrating a power transmission flow of an electric vehicle driving apparatus in a shifting state according to an example embodiment of the present disclosure.

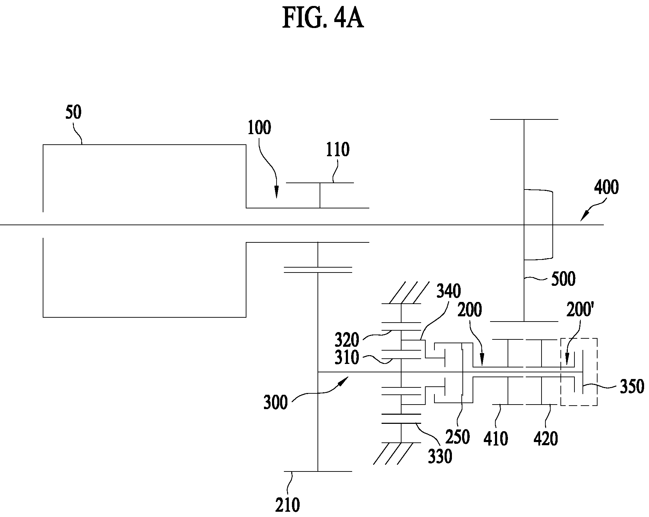

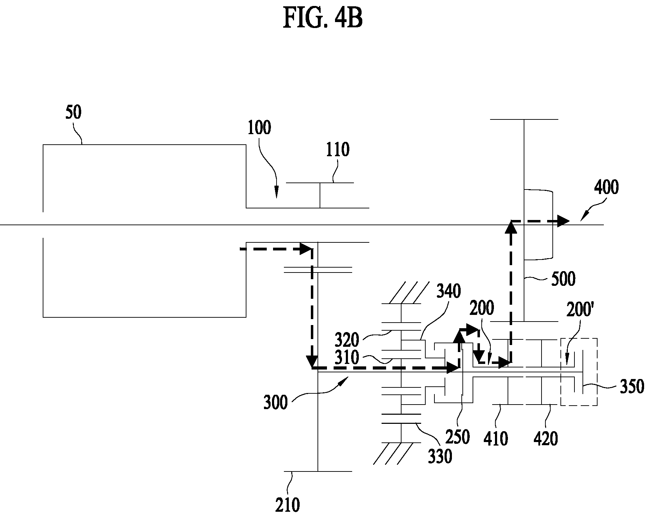

The descriptions will be made with reference to FIGS. 4A and 4B, and then made with reference to FIGS. 3A and 3B.

FIGS. 4A and 4B are diagrams illustrating a power transmission flow of an electric vehicle driving apparatus according to an example embodiment of the present disclosure. For example, the power transmission flow may be based on a case in which the electric vehicle driving apparatus is driven at a second gear ratio.

Referring to FIGS. 4A and 4B, in the electric vehicle driving apparatus, to drive the first output gear 410, power may be transmitted from the driving motor 50 to the first output gear 410 through the input shaft 100, the motor gear 110, the bypass gear 210, the bypass shaft 300, and the first shift shaft 200 in sequence based on operations of the synchronizer 250 and the clutch 350. In response to the first output gear 410 being driven, the power may be transmitted to the differential gear 500, and then provided to a wheel.

The wheel may be driven at the second gear ratio. The electric vehicle driving apparatus may perform a deceleration at least two times to drive the wheel at the second gear ratio, so that a sufficient deceleration ratio is secured.

To drive the wheel at the second gear ratio, the synchronizer 250 may couple the first shift shaft 200 and the bypass shaft 300. For example, a sleeve included in the synchronizer 250 may move in a direction along an axis of the first shift shaft 200 to be coupled to a component connected with the bypass shaft 300. Also, the first shift shaft 200 may be integrally driven in accordance with a rotation of the bypass shaft 300.

The clutch 350 may be in a disengaged state similar to the state driven at the first gear ratio as described with reference to FIGS. 2A and 2B. The clutch 350 may restrict power transmission to prevent the power of the bypass shaft 300 from being transmitted through the second shift shaft 200'.

To change the aforementioned state in which the electric vehicle is driven at the first gear ratio (refer to FIGS. 2A and 2B) to the state in which the electric vehicle is driven at the second gear ratio (refer to FIGS. 4A and 4B), the sleeve of the synchronizer 250 may be decoupled from the carrier 340 and coupled with a component connected to the bypass shaft 300.

Conversely, to change the state in which the electric vehicle is driven at the second gear ratio (refer to FIGS. 4A and 4B) to the state in which the electric vehicle is driven at the first gear ratio (refer to FIGS. 2A and 2B), that is, to change a speed of the electric vehicle, the sleeve of the synchronizer 250 may relatively move to be decoupled from the bypass shaft 300 and coupled with the carrier 340.

As such, the engagement by the synchronizer 250 may be temporarily released to change the speed of the electric vehicle. Through this, the power transmission performed through the first shift shaft 200 and the first output gear 410 may be temporarily restricted.

However, according to example embodiments of the present disclosure, even in a state in which the power transmission to the wheel through the first shift shaft 200 and the first output gear 410 is restricted, the electric vehicle may continuously transmit the power to the wheel during shifting as illustrated in FIGS. 3A and 3B.

Referring to FIGS. 3A and 3B, based on operations of the synchronizer 250 and the clutch 350, an electric vehicle driving apparatus may transmit power from the driving motor 50 to the differential gear 500 through the input shaft 100, the motor gear 110, the bypass gear 210, the bypass shaft 300, the second shift shaft 200' connected with the bypass shaft 300, and the second output gear 420 in sequence.

The wheel may be driven at a third gear ratio. The third gear ratio may be a ratio ranging between the first gear ratio and the second gear ratio.

When the electric vehicle driving apparatus is to change a speed from the first gear ratio to the second gear ratio or from the second gear ratio to the first gear ratio, synchronization may be performed on a speed of the driving motor 50 to correspond to each gear stage. When changing the speed, the electric vehicle driving apparatus may transmit power corresponding to the third gear ratio to the wheel based on the power transmission flow of FIGS. 3A and 3B. Through this, the vehicle driving apparatus may reduce an amount of time used for the synchronization or change the speed with increased efficiency.

In FIGS. 3A and 3B, the synchronizer 250 may couple the first shift shaft 200 with neither the carrier 340 nor the bypass shaft 300. In this case, power of the carrier 340 or power of the bypass shaft 300 may not be directly transmitted to the first shift shaft 200.

In FIGS. 3A and 3B, the clutch 350 may be in an engaged state and thus, may transmit the power of the bypass shaft 300 to the second shift shaft 200'. For example, in response to the engagement of the clutch 350, the bypass shaft 300 coupled with the bypass gear 210 may be connected to the second shift shaft 200' coupled with the second output gear 420.

As described above, according to example embodiments of the present disclosure, in a synchronizing state in which the electric vehicle is driven at the first gear ratio or the second gear ratio, the electric vehicle driving apparatus may connect the synchronizer 250 (e.g., the sleeve of the synchronizer 250) to one component and release an engagement of the clutch 350 so that the power is continuously transmitted to the wheel. Also, in a shifting state in which the speed is changed from the first gear ratio to the second gear ratio or changed from the second gear ratio to the first gear ratio, the electric vehicle driving apparatus may disconnect the synchronizer 250 from one component and engage the clutch 350 so that the power is continuously transmitted to the wheel.

In one example embodiment, the electric vehicle driving apparatus may further include a processor (not shown) that electrically connects the synchronizer 250 and the clutch 350.

The electric vehicle driving apparatus may use the processor to electrically control operations of the synchronizer 250 and the clutch 350.

For example, when a first signal (e.g., a shifting request signal) is detected in the synchronizing state in which the electric vehicle is driven at the first gear ratio or the second gear ratio, the processor included in the electric vehicle driving apparatus may drive the electric vehicle in the shifting state by controlling the synchronizer 250 and the clutch 350 such that the synchronizer 250 is decoupled from one component and the clutch 350 is engaged based on the first signal.

Through this, the coupling between the shift shaft 200 and either the carrier 340 or the bypass shaft 300 may be released and the power from the bypass shaft 300 may be transmitted to the second shift shaft 200' (or the second output gear 420). The electric vehicle may be driven at the third gear ratio that ranges between the first gear ratio and the second gear ratio based on the power transmitted through the bypass shaft 300, the second shift shaft 200', the second output gear 420, and the differential gear 500 in sequence.

For example, when the electric vehicle detects a second signal (e.g., a shifting-completed signal) in the shifting state, the processor of the electric vehicle driving apparatus may control the synchronizer 250 to be coupled to either the carrier 340 or the bypass shaft 300 and control the clutch 350 to be disengaged based on the second signal.

Through this, the first shift shaft 200 may be coupled to either the carrier 340 or the bypass shaft 300 and power transmission between the bypass shaft 300 and the second shift shaft 200' (or the second output gear 420) may be restricted. Accordingly, the electric vehicle may be driven based on a gear ratio corresponding to a component coupled with the synchronizer 250.

In another example embodiment, the synchronizer 250 and the clutch 350 may be operated based on a mechanical coupling scheme instead of the control of the processor.

According to an electric vehicle driving apparatus according to example embodiments of the present disclosure, it is possible to implement a transmission for providing a shift function with two or more shift speeds, the transmission which is implemented in a co-axial type, thereby improving spatial usability of the inside of an electric vehicle.

Particularly, the electric vehicle driving apparatus may be provided with a structure in which a space occupied by the transmission is minimized by applying a planetary gear set, so that a sufficient deceleration ratio is implemented.

Also, it is possible to provide an electric vehicle with improved driving performance and minimize a shift shock experienced by a user by forming a bypass path for power so that the power can be continuously transmitted to a wheel even while a speed is being changed.

It is apparent to those skilled in the art that the present disclosure may be materialized in other specific forms without departing from the essential characteristics of the present disclosure.

The detailed description should not be construed as being limitative from all aspects, but should be construed as being illustrative. The scope of the present disclosure should be determined by reasonable analysis of the attached claims, and all changes within the equivalent range of the present disclosure are included in the scope of the present disclosure.

## Claims

1. An electric vehicle driving apparatus comprising:
an input shaft coupled with a driving motor;
an output shaft arranged coaxially with the input shaft;
a motor gear disposed on an outer surface of the input shaft;
a bypass gear disposed on an outer surface of a bypass shaft and externally engaged with the motor gear;
a planetary gear set disposed on the outer surface of the bypass shaft;
a first output gear and a second output gear arranged at an outer surface of a shift shaft arranged coaxially with the bypass shaft;
a synchronizer selectively coupled with at least one of the bypass shaft or a carrier of the planetary gear set, the synchronizer being configured to selectively transm it power from at least one of the bypass shaft or the carrier to the first output gear; and
a clutch configured to selectively transmit the power from the bypass shaft to the second output gear.

2. The electric vehicle driving apparatus of claim 1, wherein at least one of the input shaft or the shift shaft comprises a hollow shaft, and wherein at least one of the output shaft or the bypass shaft comprises a solid shaft.

3. The electric vehicle driving apparatus of claim 1 or 2, wherein:
when the synchronizer is coupled to at least one of the carrier or the bypass shaft, the clutch is configured to restrict transmission of the power from the bypass shaft to the second output gear; and
when the synchronizer is not coupled to the carrier or the bypass shaft, the clutch is configured to allow transmission of the power from the bypass shaft to the second output gear.

4. The electric vehicle driving apparatus of claim 1, 2, or 3, wherein the synchronizer comprises a sleeve configured to move in a direction along an axis of the bypass shaft, and
wherein the synchronizer, in response to the sleeve being coupled with at least one of the bypass shaft or the carrier, is configured to couple the shift shaft with at least one of the carrier or the bypass shaft.

5. The electric vehicle driving apparatus of any one of claims 1 to 4, wherein the planetary gear set comprises:
a sun gear;
a ring gear disposed such that the ring gear at least partially encloses the sun gear; and
one or more pinion gears externally engaged with an outer circumferential surface of the sun gear and an inner circumferential surface of the ring gear, and
wherein the ring gear is fixed to a housing of the electric vehicle driving apparatus.

6. The electric vehicle driving apparatus of any one of claims 1 to 5, wherein a third gear ratio associated with the power transmitted from the bypass shaft to the second output gear comprises a ratio ranging between a first gear ratio associated with power transmitted from the carrier to the first output gear and a second gear ratio associated with power transmitted from the bypass shaft to the first output gear.

7. The electric vehicle driving apparatus of any one of claims 1 to 6, wherein the clutch comprises a frictional clutch.

8. The electric vehicle driving apparatus of any one of claims 1 to 7, further comprising:
a differential gear disposed on the outer surface of the output shaft and configured to receive power from at least one of the first output gear or the second output gear.

9. The electric vehicle driving apparatus of claim 8, further comprising:
a processor electrically connected to the synchronizer and the clutch,
wherein the processor is configured to control operations of the synchronizer and the clutch based on one or more electrical signals.

10. The electric vehicle driving apparatus of claim 9, wherein the processor is configured to:
based on a first electrical signal of the one or more electrical signals:
control the synchronizer such that the synchronizer decouples the shift shaft from at least one of the carrier or the bypass shaft; and
engage the clutch to allow a power transmission between the bypass shaft and the second output gear; and
based on a second electrical signal of the one or more electrical signals:
disengage the clutch to restrict the power transmission between the bypass shaft and the second output gear; and
control the synchronizer to couple the shift shaft to either the carrier or the bypass shaft.

11. The electric vehicle driving apparatus of claim 10, wherein:
when the synchronizer is controlled based on the first electrical signal, the differential gear is configured to receive a power of the driving motor through the first output gear, and
when the synchronizer is controlled based on the second electrical signal, the differential gear is configured to receive the power of the driving motor through the second output gear.

12. The electric vehicle driving apparatus of claim 8, wherein the differential gear is externally engaged with the first output gear and the second output gear.

13. The electric vehicle driving apparatus of any one of claims 1 to 12, wherein the clutch is disposed at an end portion of the bypass shaft.

14. An electric vehicle driving apparatus comprising:
a driving motor;
a plurality of shafts comprising an input shaft, an output shaft disposed coaxially with the input shaft, a bypass shaft spaced apart from the input shaft, and a shift shaft arranged coaxially with the bypass shaft;
a motor gear coupled to an outer circumferential surface of the input shaft;
a bypass gear coupled to an outer circumferential surface of the bypass shaft and externally engaged with the motor gear;
a planetary gear set comprising:
a sun gear coupled to the outer circumferential surface of the bypass shaft;
a ring gear fixedly disposed to enclose the sun gear;
one or more pinion gears externally engaged with an outer circumferential surface of the sun gear and an inner circumferential surface of the ring gear; and
a carrier coupled to a rotary shaft of the one or more pinion gears;
a plurality of output gears comprising a first output gear and a second output gear and coupled to an outer circumferential surface of the shift shaft, the second output gear being spaced apart from the first output gear;
a synchronizer configured to selectively couple at least one of the carrier or the bypass shaft with the shift shaft; and
a clutch configured to selectively control a power transmission between the bypass shaft and the second output gear.

15. The electric vehicle driving apparatus of claim 14, wherein:
when the synchronizer couples at least one of the carrier or the bypass shaft with the shift shaft, the clutch is configured to restrict the power transmission between the bypass shaft and the second output gear, and
when the synchronizer decouples at least one of the carrier or the bypass shaft from the shift shaft, the clutch is configured to allow the power transmission between the bypass shaft and the second output gear.

## Amended claims

### Amended claims in accordance with Rule 137(2) EPC.

1. An electric vehicle driving apparatus comprising:
an input shaft (100) coupled with a driving motor (50);
an output shaft (400) arranged coaxially with the input shaft (100);
a motor gear (110) disposed on an outer surface of the input shaft (100);
a bypass gear (210) disposed on an outer surface of a bypass shaft (300) and externally engaged with the motor gear (110);
a planetary gear set disposed on the outer surface of the bypass shaft (300);
a first output gear (410) arranged at an outer surface of a first shift shaft (200) and a second output gear (420) arranged at an outer surface of a second shift shaft (200'), the first shift shaft (200) and the second shift shaft (200') being arranged coaxially with the bypass shaft (300);
a synchronizer (250) selectively coupled with the bypass shaft (300) or a carrier (340) of the planetary gear set, the synchronizer (250) being configured to selectively transmit power from the bypass shaft (300) or the carrier (340) to the first output gear (410); and
a clutch (350) configured to selectively transmit the power from the bypass shaft (300) to the second output gear (420).

2. The electric vehicle driving apparatus of claim 1, wherein at least one of the input shaft (100), the first shift shaft (200), or the second shift shaft (200') comprises a hollow shaft, and wherein at least one of the output shaft (400) or the bypass shaft (300) comprises a solid shaft.

3. The electric vehicle driving apparatus of claim 1, wherein:
when the synchronizer (250) is coupled to at least one of the carrier (340) or the bypass shaft (300), the clutch (350) is configured to restrict transmission of the power from the bypass shaft (300) to the second output gear (420); and
when the synchronizer (250) is not coupled to the carrier (340) or the bypass shaft (300), the clutch (350) is configured to allow transmission of the power from the bypass shaft (300) to the second output gear (420).

4. The electric vehicle driving apparatus of claim 1, wherein the synchronizer (250) comprises a sleeve configured to move in a direction along an axis of the bypass shaft (300), and
wherein the synchronizer (250), in response to the sleeve being coupled with at least one of the bypass shaft (300) or the carrier (340), is configured to couple the first shift shaft (200) with the carrier (340) or the bypass shaft (300).

5. The electric vehicle driving apparatus of claim 1, wherein the planetary gear set comprises:
a sun gear (310);
a ring gear (330) disposed such that the ring gear (330) at least partially encloses the sun gear (310); and
one or more pinion gears (320) externally engaged with an outer circumferential surface of the sun gear (310) and an inner circumferential surface of the ring gear (330), and
wherein the ring gear (330) is fixed to a housing of the electric vehicle driving apparatus.

6. The electric vehicle driving apparatus of claim 1, wherein a third gear ratio associated with the power transmitted from the bypass shaft (300) to the second output gear (420) comprises a ratio ranging between a first gear ratio associated with power transmitted from the carrier (340) to the first output gear (410) and a second gear ratio associated with power transmitted from the bypass shaft (300) to the first output gear (410).

7. The electric vehicle driving apparatus of claim 1, wherein the clutch (350) comprises a frictional clutch.

8. The electric vehicle driving apparatus of claim 1, further comprising:
a differential gear (500) disposed on the outer surface of the output shaft (400) and configured to receive power from at least one of the first output gear (410) or the second output gear (420).

9. The electric vehicle driving apparatus of claim 8, further comprising:
a processor electrically connected to the synchronizer (250) and the clutch (350),
wherein the processor is configured to control operations of the synchronizer (250) and the clutch (350) based on one or more electrical signals.

10. The electric vehicle driving apparatus of claim 9, wherein the processor is configured to:
based on a first electrical signal of the one or more electrical signals:
control the synchronizer (250) such that the synchronizer decouples the first shift shaft (200) from the carrier (340) or the bypass shaft (300); and
engage the clutch (350) to allow a power transmission between the bypass shaft (300) and the second output gear (420); and
based on a second electrical signal of the one or more electrical signals:
disengage the clutch (350) to restrict the power transmission between the bypass shaft (300) and the second output gear (420); and
control the synchronizer (250) to couple the first shift shaft (200) to either the carrier (340) or the bypass shaft (300).

11. The electric vehicle driving apparatus of claim 10, wherein:
when the synchronizer (250) is controlled based on the first electrical signal, the differential gear (500) is configured to receive a power of the driving motor (50) through the first output gear (410), and
when the synchronizer (250) is controlled based on the second electrical signal, the differential gear (500) is configured to receive the power of the driving motor (50) through the second output gear (420).

12. The electric vehicle driving apparatus of claim 8, wherein the differential gear (500) is externally engaged with the first output gear (410) and the second output gear (420).

13. The electric vehicle driving apparatus of claim 1, wherein the clutch (350) is disposed at an end portion of the bypass shaft (300).
